Europäisches Patentamt

European Patent Office

Office européen des brevets

(11) Veröffentlichungsnummer: **0 136 287**
**B1**

(12) **EUROPÄISCHE PATENTSCHRIFT**

(45) Veröffentlichungstag der Patentschrift:
**01.07.87**

(21) Anmeldenummer: **84900269.6**

(22) Anmeldetag: **23.12.83**

(86) Internationale Anmeldenummer:
**PCT/DE 83/00215**

(87) Internationale Veröffentlichungsnummer:
**WO 84/03060 (16.08.84 Gazette 84/20)**

(51) Int. Cl.⁴: **B 23 Q 7/00,** B 21 D 43/00,
B 21 D 3/04

(54) **VORRICHTUNG ZUM FÜHREN VON AXIAL BEWEGTEN STANGEN, ROHREN UND DRÄHTEN.**

(30) Priorität: **04.02.83 DE 8303023 U**

(43) Veröffentlichungstag der Anmeldung:
**10.04.85 Patentblatt 85/15**

(45) Bekanntmachung des Hinweises auf die Patenterteilung:
**01.07.87 Patentblatt 87/27**

(84) Benannte Vertragsstaaten:
**BE DE FR GB**

(56) Entgegenhaltungen:
**EP-A-0 010 597**
**FR-A-2 171 655**
**GB-A-847 118**
**GB-A-1 535 162**
**US-A-2 945 287**
**US-A-3 147 653**
**US-A-4 143 534**

(73) Patentinhaber: **Th. Kieserling & Albrecht GmbH & Co., Birkenweiher 66, D-5650 Solingen 1 (DE)**

(72) Erfinder: **HARTKOPF, Heinz, Marmorweg 5, D-5650 Solingen (DE)**

## Beschreibung

Die Erfindung bezieht sich auf eine Vorrichtung zum Führen von axial bewegten Stangen, Rohren oder Draht, gem. dem Oberbegriff von Anspruch 1. Aus der DE-OS 2 449 241 ist eine solche Vorrichtung bekannt, die Schrägrollenrichtmaschinen vorgeordnet wird und in der axial bewegte runde Stangen unter gleichzeitiger Rotation um ihre Längsachse geführt werden. Dort ist eine Mehrzahl von Blenden vorgesehen, die dicht hintereinander angeordnet sind und die das Werkstück einschließen. Gleichartige Segmente aller Blenden sind zu einer kammartigen Reihe von Spannhebeln zusammengefaßt. Zwei Reihen von Spannhebeln greifen kämmend ineinander. Daraus resultiert eine Vielzahl von einzelnen Spannhebeln, die das Werkstück in die V-förmig ausgebildeten Bodensegmentabschnitte hineindrücken.

Die dort gezeigte Vorrichtung hat einen nicht unerheblichen Herstellungsaufwand, da alle Spannhebel und Bodensegmentlängsabschnitte einzeln gefertigt werden müssen. Dadurch, daß die einzelnen Spannhebel und Bodensegmentabschnitte hintereinander angeordnet sind, d.h. auf Lücke stehen, werden die am Werkstück anliegenden Segmentbereiche relativ hoch belastet.

Ausgehend von einer Vorrichtung der obigen Gattung liegt der Erfindung die Aufgabe zugrunde, eine Führungseinrichtung dieser Art zu schaffen, die sich durch bauliche Einfachheit und Robustheit auszeichnet.

Diese Aufgabe wird erfindungsgemäß durch die kennzeichnenden Merkmale von Anspruch 1 gelöst. Die Lösung sieht vor, daß alle Segmente des Durchtrittsquerschnitts der Führungsvorrichtung gleitend aneinander vorbeifahren können und dabei einen für das Werkstück geschlossenen Durchtrittskanal bilden, ohne daß die Segmente miteinander kämmen. Beim Öffnen und Schließen wird der Durchtrittsquerschnitt für die Werkstücke stufenlos verändert. In der Endphase der Öffnungsbewegung hebt das den Durchtrittsquerschnitt der Rinne nach oben abschließende Segment von den beiden die V-Form des Bodensegments ausmachenden Teilbodenabschnitte ab und ermöglicht durch die dabei entstehende seitliche obere Öffnung des Durchtrittsquerschnitts das Einbringen eines neuen Werkstücks. Beim Aneinandervorbeigleiten der einzelnen Segmente des Durchtrittsquerschnittes nach dem Schließen des Spaltes zum Einbringen verbleibt an den "Nahtstellen" der einzelnen Segmente ein Spalt, der kleiner ist als der kleinste Durchmesser der zu richtenden Werkstücke. Insofern bilden die einzelnen Segmente, die zur Veränderung des Durchtrittsquerschnitts aneinander vorbeigeschoben werden, einen geschlossenen Querschnitt - sie sind schlüssig. Die Formen und die Bewegungsbahnen der Segmente sind aufeinander abgestimmt.

Die Ausbildung und Anordnung der Segmente nach Anspruch 1 erlaubt deren Gestaltung gem. Anspruch 2. Ein Intervall bis zum Verschleiß der Auskleidung der Rinne wird dadurch länger. Theoretisch hat die Vorrichtung eine 3-fache, linienförmige Anlage am Werkstück, über dessen gesamte von der Vorrichtung erfaßte Länge gesehen. Dadurch wird eine Verschleißminderung der Auskleidung der Zuführeinrichtung erreicht. Die Montage der Auskleidung der Vorrichtung mit einem Verschleißbelag wird vereinfacht, da der Verschleißbelag nicht mehr an einer Vielzahl einzelner Spannhebel befestigt werden muß.

Bevorzugt ist eine Ausgestaltung der Erfindung gem. Anspruch 4 vorgesehen. Da die beweglichen Segmente auf Kreisbahnen bewegt werden, was an sich bekannt ist, sind die Segmente hohl bzw. gewölbt ausgebildet. Während die die V-Form des Vorrichtungsbodens ausmachenden Teilbodenabschnitte im Querschnitt eine angenäherte, konvexe Kreisform haben, weist die Profilierung des oberen verschließenden Segmentes ein hohles Profil auf, das sich aus der Verschwenkung des beweglichen Segments und des beweglichen Teilbodenabschnitts gegeneinander ergibt, damit ein schlüssiges Aneinandervorbeigleiten der beweglichen Segmente an deren Nahtstelle möglich wird.

Zur Erzielung der Schlüssigkeit des aneinander Vorbeigleitens der verscheidenen Segmente muß ein genau abgestimmter Bewegungsablauf des beweglichen Segments und des beweglichen Teilbodenabschnitts eingehalten werden. Zur Berücksichtigung dieser Forderung ist die Ausgestaltung gem. Anspruch 5 vorgesehen.

Die Ausgestaltung gem. Anspruch 6 erlaubt eine Bedienung der Vorrichtung von unterhalb des Durchtrittsquerschnittes.

Eine bevorzugte Weiterbildung der Erfindung ist in Anspruch 7 wiedergegeben.

Die Erfindung wird im weiteren anhand der Zeichnung erläutert, dabei zeigen:

Fig. 1: Die Vorrichtung im Querschnitt in geschlossener Arbeitsstellung

Fig. 2: Die Vorrichtung im Querschnitt in geöffneter Stellung beim Einbringen eines neuen Werkstückes- gem. Schnitt II-II in Fig. 3

Fig. 3: Eine Seitenansicht der Vorrichtung einlaufseitig zu einer Schrägwalzenrichtmaschine

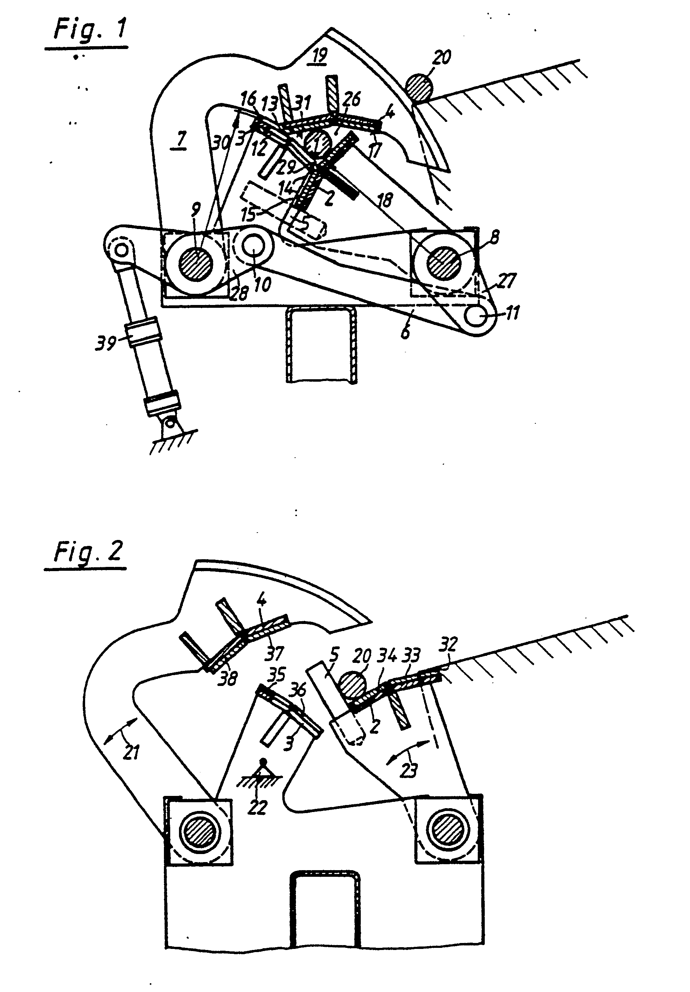

Die in Fig. 1 gezeigte Vorrichtung besteht aus 3 Segmenten 2, 3, 4, die eine Stange 1 bei deren Achsialbewegung in radialer Richtung führen. Der Boden der Vorrichtung wird von den Teilbodenabschnitten Segmenten 2 und 3 gebildet. Der Teilbodenabschnitt 2 ist mit dem Radius 18 um die Welle 8 schwenkbar. Es trägt an seinem unteren Ende einen von seiner Führungsfläche 15 abkragenden, gummielastischen Einheber 5. Dieser durchgreift bei der Schließbewegung einen Einschnitt 12 im ortsfesten Teilbodenabschnitt 3. Die Führungsflächen 15, 16 sind V-förmig zueinander gestellt und schließen einen Winkel von annähernd 90° ein. Der Durchtrittsquerschnitt 26 für die Stange 1 wird von oben durch das bewegliche Segment 4 begrenzt. Das bewegliche Segment 4 ist am freien Schenkel 19 eines Winkelhebels 7 befestigt. Dieser ist um die Längsachse der Welle 9 schwenkbar. An den Wellen 8 und 9 ist zusätzlich je ein Hebel 27, 28 befestigt. Beide sind über eine Koppel 6 und die Gelenke 10, 11 miteinander verbunden. Dadurch erfolgt eine Synchronisierung der Bewegung des beweglichen Teilbodenabschnitts 2 bzw. des beweglichen Segments 4. Das bewegliche Segment 4 gleitet bei der Schließ- und Öffnungsbewegung unter Belassung eines Luftspaltes 13 über den ortsfesten Teilbodenabschnitt 3. Der bewegliche Teilbodenabschnitt 2 schwenkt an der Unterkante 29 des Teilbodenabschnitts 3 vorbei, so daß sich zwischen beiden ein Spalt 14 ergibt. In gleicher Weise gleiten der bewegliche Teilbodenabschnitt 2 sowie das bewegliche Segment 4 bei der Öffnungs- und Schließbewegung mit minimalem Abstand aneinander vorbei, so daß sich, abgesehen von der in Fig. 2 gezeigten geöffneten Stellung der Vorrichtung, ein, auf den Querschnitt des zu richtenden Werkstücks bezogen, geschlossener Durchtrittsquerschnitt 26 für die Stange 1 ergibt.

Der Bodenabschnitt 2, 3 und das bewegliche Segment 4 sind stangenförmig ausgebildet, erstrecken sich durchgehend über die gesamte Länge der Vorrichtung und haben in dem in Fig. 1 gezeigten Querschnitt eine der Kreisform angenäherte abgewinkelte Form der Führungsflächen 15, 16, 17.

Die Wölbung der Führungsfläche 15 ist dem Kreisbogen mit dem Radius 18 angeglichen. Die Wölbung der Führungsfläche 16 ist dem Kreisbogen mit dem Radius 30 zwischen der Unterkante 31 des beweglichen Segmentes 4 und der Längsachse der Welle 9 angenähert. Die Höhlung der Führungsfläche 17 ergibt sich aus dem Bewegungsablauf der vorderen Kante 32 der Führungsfläche 15 des beweglichen Teilbodenabschnitts 2 des V-förmigen Vorrichtungsbodens und des beweglichen Segments 4.

Die Führungsflächen 15...17 werden von streifenförmigem Verschleißmaterial 33 - 37 gebildet, das sich über die gesamte Länge der Vorrichtung erstreckt.

Der bewegliche Teilbodenabschnitt 2 und das bewegliche Segment 4 sind entsprechend den Pfeilen 21, 23 schwenkbar gelagert. Der Teilbodenabschnitt 3 ist, wie bei 22 angedeutet, ortsfest.

Wie in Fig. 2 gezeigt, rollt ein ungerichtetes Werkstück 20 über den beweglichen Teilbodenabschnitt 2 des Vorrichtungsbodens gegen den gummielastischen Einheber 5. Im Verlauf der Schließbewegung der Vorrichtung legt der Einheber das noch ungerichtete Werkstück 20 behutsam gegen den ortsfesten Teilbodenabschnitt 3 und verläßt den Durchtrittsquerschnitt 26 für das Werkstück 20 durch den Einschnitt 12. Im weiteren Verlauf der Schließbewegung wird der dann bereits geschlossene Durchtrittsquerschnitt auf das dem Werkstückdurchmesser angepaßte Maß verkleinert.

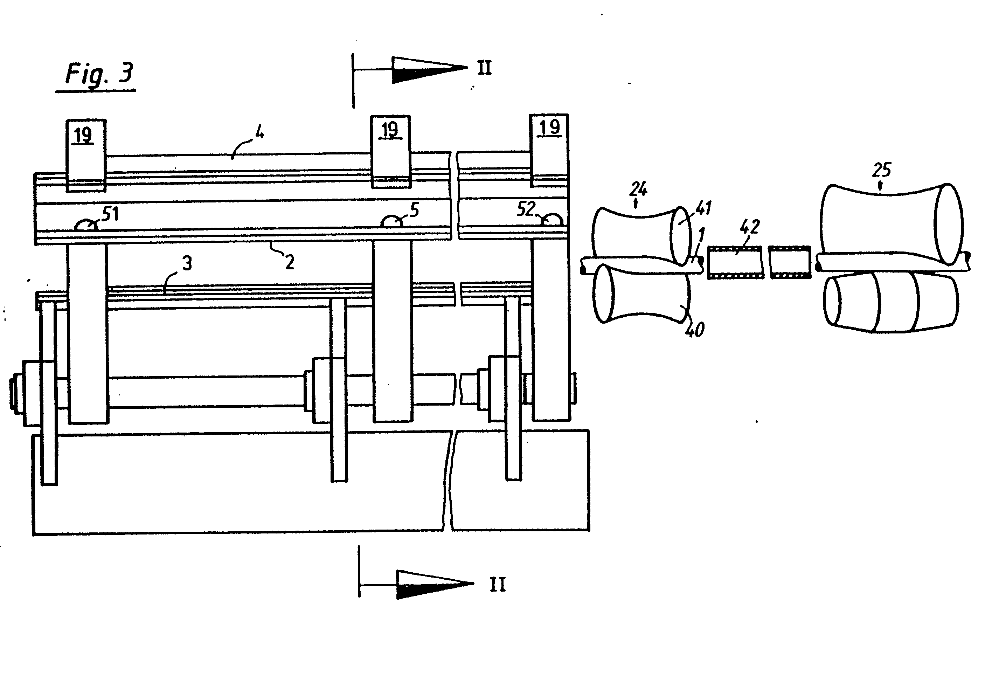

In Fig 3 ist die Einordnung der Vorrichtung als Zuführrinne zu einer Schrägwalzenrichtmaschine 25 gezeigt. Der Vorrichtung ist eine Fördereinheit 24 nachgeordnet, die aus 2 schräg angestellten, angetriebenen Förderwalzen 40, 41 besteht.

Die Fördereinheit 24 bewegt das Werkstück 1 durch ein Zwischenrohr 42 in die Schrägwalzenrichtmaschine 25.

Über die Länge der Vorrichtung verteilt sind einige Einheber 5, 51, 52 vorgesehen, die unter Berücksichtigung der Eigensteifigkeit des Werkstücks verhindern, daß dieses beim Einrollen in die Vorrichtung gegen das ortsfeste Segment 3 prallt.

Die Anlenkung des beweglichen Teilbodenabschnitts 2 bzw des beweglichen Segments 4 mit den Wellen 8 u.9 erfolgt unterhalb des Durchtrittsquerschnitts 26. Auch die Hebel 27, 28 bleiben in jeder Drehlage unterhalb des Durchtrittsquerschnitts. Die gesamte Bedienung des beweglichen Teilbodenabschnitts 2 bzw. des beweglichen Segmente 4 läßt den Arbeits- und Bewegungsraum der Vorrichtung frei zugänglich.

Die Lage der Werkstücke in horizontaler Querrrichtung ist bei allen Werkstückdurchmessern unverändert. In senkrechter Richtung erfolgt eine Absenkung kleinerer Werstükke und umgekehrt, was den Bedingungen des Richtvorgangs entgegenkommt.

**Patentansprüche**

1. Vorrichtung zum Führen von axial bewegten runden Stangen (1), Rohren oder Draht, die bei ihrer Axialbewegung eine Rotation um ihre Längsachse durchführen,
mit einem in seiner Größe veränderlichen Durchtrittsquerschnitt (26) für die Werkstücke (1), bestedend aus einem nach oben V-förmig geöffneten Bodenabschnitt (2, 3) und einer schließeinheit zum Verschließen des V-förmigen Bodenabschnitts (2, 3) von oben, die mindestens ein bewegliches Segment (4) aufweist,
dadurch gekennzeichnet, daß
der V-förmige Bodenabschnitt (2, 3) in seinem Scheitel zweigeteilt ist, wobei ein erster Teilbodenabschnitt (2) beweglich ist und die Schließeinheit aus einem einzigen beweglichen Segment (4) besteht, das beim Öffnen und Schließen eng an einem zweiten Teilbodenabschnitt (3) vorbeizieht, derart, daß Führungsflächen (17, 16, 15) des beweglichen Segments (4) und des ersten (2) sowie des zweiten (3) Teilbodenabschnitts einen zusammenhängenden Abschnitt des veränderlichen Durchtrittsquerschnitts (26) bilden.

2. Vorrichtung nach Anspruch 1, dadurch gekennzeichnet daß die Führungsflächen 15, 16, 17) des Durchtrittsquerschnitts sich durchgehend über die gesamte Länge der Vorrichtung erstrecken.

3. Vorrichtung nach einem der Ansprüche 1 oder 2, dadurch gekennzeichnet daß, eine Kante (32) des ersten beweglichen Teilbodenabschnitts (2) des V-förmigen Bodenabschnitts bei der Schließ- und Öffnungsbewegung eng an der Führungsfläche (17) des beweglichen Segments (4) vorbeizeiht.

4. Vorrichtung nach einem der vorausgehenden Ansprüche 1 bis 3, dadurch gekennzeichnet daß, die Führungsflächen (15, 16) der beiden Teilbodenabschnitte (2, 3) konvex gewölbt sind, und daß das bewegliche Segment (4) konkav gehöhlt ist, wobei der Wölbungsradius (18) des ersten beweglichen Teilbodenabschnitts (2) im wesentlichen dem Schwenkradius dieses Teilbodenabschnitts entspricht.

5. Vorrichtung nach einem der vorangegangenen Ansprüche, dadurch gekennzeichnet, daß das bewegliche Segment (4) und der erste bewegliche Teilbodenabschnitt (2) durch eine Koppel (6) verbunden sind.

6. Vorrichtung nach Anspruch 4, dadurch gekennzeichnet, daß das bewegliche Segment (4) an dem freien Schenkel (19) eines Winkelhebels (7) ausgebildet ist.

7. Vorrichtung nach Anspruch 1, dadurch gekennzeichnet, daß der erste bewegliche Teilbodenabschnitt (2) einen von seiner Führungsfläche (15) abstehenden Einheber (5) trägt.

## Claims

1. Device for the guiding of axially moved round rods (1) pipes or wire revolving on their longitudinal axis while being axially advanced, with a passage cross section (26) the workpiece, variable in size, comprising a V-shaped, upwardly open bottom element (2, 3) and a closing section for closing the bottom element from above with at least one movable section (4), characterized in that, the V-shaped bottom element is in its apex seperated into two parts, a first part of the bottom element being movable and the closing section comprising only one single movable segment (4) moving formfittingly over a second part (3) of the bottom element in a manner that the guiding strips (15, 16, 17) of the movable segment (4) and the first (2) and the second (3) parts of the bottom element form a closed section of the of the variable cross section of the passage.

2. The device according to claim 1, characterized in that, the guiding strips (15, 16, 17) of the cross section extend over the whole length of the device.

3. Device according to one of the claims 1 or 2, characterized in that one edge (32) of the first movable section (2) of the V-shaped bottom element moves in close proximity to the guiding plate (17) of the movable segment (4) during the opening and closing movement.

4. Device according to one of the preceding claims 1 through 3, characterized in that the guiding strips (15, 16) of the two parts (2, 3) of the bottom section are convex and the movable section (4) is concave, the radius (18) of curvature of the first movable part (2) corresponding approxiately to the radius of its movement.

5. Device according to one of the preceding claims, characterized in that the movable segment (4) and the first movable part (2) of the bottom section are joined by a tie-beam.

6. The device according to claim 4, characterized in that, the movable segment (4) is made up by the free leg (19) of an angled lever (7).

7. The device according to claim 1, characterized in that, the first movable part (2) of the bottom section comprises a catcher projection (5) located in an angled position with regard to its guiding strip (15).

## Revendications

1. Dispositif de guidage de barres (1), de tubes ou de fils ronds effectuant, au cours de leur déplacement axial, un mouvement de rotation autour de leur axe longitudinal, qui comporte une section de passage (26) de dimensions variables pour les pièces (1) et est constitué par un secteur de sol (2, 3), ouvert en forme de V vers le haut, et par une unité de fermeture qui assure la fermeture, depuis le haut, du secteur (2, 3) en forme de V et comporte au moins un segment mobile (1), caractérisé en ce que le secteur de sol (2, 3) est subdivisé en son sommet en deux parties, une première partie (2) de secteur de sol étant mobile et l'unité de fermeture étant constituée par un seul segment mobile (4) qui, au cours de l'ouverture et de la fermeture, passe très près devant une deuxième partie (3) de secteur de sol, de telle manière que des surfaces de guidage (17, 16, 15) du segment mobile (4) et de la première (2) ainsi que de la deuxième (3) partie du secteur de sol forment un secteur cohérent de la section de passage variable (26).

2. Dispositif selon la revendication 1, caractérisé en ce que les surfaces de guidage (15, 16, 17) de la section de passage s'étendent sur toute la longueur du dispositif.

3. Dispositif selon l'une des revendications 1 ou 2, caractérisé en ce qu'un bord (32) de la première partie mobile (2) du secteur de sol en forme de V passe, au cours du mouvement de fermeture et d'ouverture, très près devant la surface de guidage (17) du segment mobile (4).

4. Dispositif selon l'une des revendications 1 à 3, caractérisé en ce que les surfaces de guidage (15, 16) des deux parties (2, 3) du secteur de sol sont incurvées en voûte dans le sens convexe et en ce que le segment mobile (4) est creusé dans le sens concave, le rayon (18) d'incurvation en voûte de la première partie (2) mobile du secteur de sol correspondant sensiblement au rayon de pivotement de cette partie de secteur de sol.

5. Dispositif selon l'une des revendications 1 à 4, caractérisé en ce que le segment mobile (4) et la première partie mobile (2) du secteur de sol sont reliés par un accouplement (6).

6. Dispositif selon la revendication 4, caractérisé en ce que le segment mobile (4) est réalisé sur la branche libre (19) d'un levier coudé (7).

7. Dispositif selon la revendication 1, caractérisé en ce que la première partie mobile (2) du secteur de sol porte un dispositif de soulèvement (5) s'écartant de sa surface de guidage (15).

Fig. 1

Fig. 2

0 136 287

1

*Fig. 3*